# EUROPEAN PATENT APPLICATION

(11) **EP 4 386 038 A1**
(43) Date of publication of application: **19.06.2024**
(21) Application number: 22212807.6
(22) Date of filing: 12.12.2022
(51) Int. Cl.: C08J 3/12

(54) **POWDER COMPOSITION FOR POWDER BED FUSION ADDITIVE MANUFACTURING**

(71) Applicant: Stratasys, Inc., Eden Prairie, MN 55344 (US)
(72) Inventor: WITTERS, Stijn, 6167 RD Geleen (NL); PEPELS, Mark Petrus Franciscus, 6167 RD Geleen (NL); DERKS, Franciscus Johannes Marie, 6167 RD Geleen (NL)
(74) Representative: V.O.

(57) **Abstract**

The invention is in the field of additive manufacturing. There is provided a method for manufacturing a powder composition having a D50 particle size value of 20-150 microns suitable for powder bed fusion additive manufacturing processes, comprising the steps of: (a) providing a particulate starting material comprising a semicrystalline polymer; (b) optionally, compacting the starting material with a compacting pressure of >5 kN/cm², thereby obtaining a compacted material; (c) optionally, reducing the size of the particulate starting material or the compacted material; (d) dry blending the starting material, the compacted material, or the size-reduced material with a pigment using high shear mixing; (e) optionally, size fractionating the starting material, the compacted material, the size-reduced material and/or the dry blended material. There is also provided a powder composition having a D50 particle size value of 20-150 microns, preferably obtainable by a such a method, suitable for additive manufacturing powder bed fusion processes, comprising a semicrystalline polymer and a pigment, wherein the powder composition has a reflectance at 800 nm of 50 % or less, preferably 25 % or less. There is also provided an additive manufacturing method for producing a three-dimensional article, comprising the step of subjecting such a powder composition to powder bed fusion, as well as an article comprising a semicrystalline polymer, obtainable by a such a method.

## Description

### Field of the invention

The invention is in the field of additive manufacturing. In particular, the invention is directed to a method for manufacturing a powder composition, to a powder composition, to an additive manufacturing method and to an article.

### Background

A variety of additive manufacturing processes are known and used. One subset of such processes which utilizes powder as the build medium is particularly useful for several end-use applications. Such powder-based additive manufacturing processes include Selective Laser Sintering (SLS), High Speed Sintering (HSS), Selective Absorption Fusion (SAF) or MultiJet Fusion (MJF). There are known variations between such processes, but powder-based additive manufacturing methods all generally involve the application of a high density, high energy source of radiation, such as a laser, to selectively melt or fuse a portion of particles into a desired shape. A control mechanism serves to direct both the path and intensity of the laser in order to fuse powder disposed within specified boundaries, often on a layerwise basis. Each layer, or "slice," represents a cross-section of the final component to be fabricated at a specified thickness. Machine controls operate selectively to sinter sequential layers of powder, producing a completed part comprising a plurality of slices sintered together. Preferably, the machine control mechanism is computer-directed, and utilizes CAD files of varying formats to determine the defined boundaries for each slice.

The part may be produced by depositing a first portion of sinterable powder onto a target surface of a part bed, scanning the directed laser over the target surface, and sintering a first layer of the first portion of powder on the target surface to form the first slice. The powder is thus sintered by operating the directed laser beam within the boundaries defining the first slice, with sufficient energy, or fluence, to sinter the powder. The first slice corresponds to a first cross-sectional region of the part.

A second portion of powder may then be deposited onto the surface of the part bed and that of the first sintered slice lying thereon, and the directed laser beam scanned over the powder overlying the first sintered slice. A second layer of the second portion of powder is thus sintered by operating the laser beam within the boundaries which then define the second slice. The second sintered slice is formed at a temperature sufficient to sinter it to the first slice, with the two slices fusing together into a single portion of the object to be built. Successive layers of powder are deposited onto the previously sintered slices, with each layer being sintered in turn to form an additional slice.

A wide variety of materials may be used in powder-based additive fabrication process. Many thermoplastics, metals or ceramics are commonly used. Thermoplastic powders are preferred because they facilitate the creation of three-dimensional components with a wide variety of properties that may be suitable for a large array of end-use applications. Preferred polymeric powders include semi-crystalline thermoplastics because of their improved sinterability when compared to more crystalline thermoplastic materials.

Among thermoplastic polymer types possibly used in powder-based additive manufacturing processes are polyolefins, polyamides, polyimides, polyesters, polyphenylene sulfides, polyarylketones, liquid crystal polymers, polyacetals, and fluorochemical resins.

Currently, the most common class of thermoplastics available for additive manufacturing includes polyamides. Three of the most well-known polyamides are polylaurolactam (PA12 or Nylon 12), poly(hexamethylene adipamide) (PA66 or Nylon 6,6) and polycaprolactam (PA6 or Nylon 6). PA12 (CAS # 24937-16-4), PA6 (CAS # 25038-54-4) and PA66 (CAS # 32131-17-2) have excellent mechanical properties including high tensile strength, toughness, flexibility, resilience, and low creep. They are easy to dye and exhibit excellent resistance to wear due to a low coefficient of friction (self-lubricating). Nylons typically possess a high melting temperature and glass transition temperature, thereby enabling the solid polymers formed therefrom to possess superior mechanical properties even at increased temperatures.

Additionally, certain polyesters are also known and described. Polyesters provide certain advantages which could be useful for several end-use applications. For example, Nylons, such as Nylon 6,12, do not readily facilitate the compounding of certain additives, such as flame retardants. Rather, such additives must be added to various Nylons via so-called "dry blends." Polyesters can facilitate the compounding of such additives more easily. Further, polyesters generally exhibit lower moisture uptake than comparable polyamides. Additionally, polyesters offer sustainability advantages over other plastics. In addition to the fact that many polyesters are biodegradable or at least compostable, the means and infrastructure for recycling of polyesters exceeds that of virtually all other thermoplastic materials, so they offer a more readily circular solution. Polyester powders for additive fabrication are described in WO2020085912, which was originally assigned to DSM IP Assets B.V.

Different types of directed lasers can be used as high density, high energy source of radiation to selectively melt or fuse a portion of particles into a desired shape. In order to melt or fuse a portion of particles, the particles should absorb at least some of the light that is emitted by the lasers. If the particles do not absorb enough of the laser's light, pigments or dyes can be added to increase light absorption. Gas lasers, such as CO₂ lasers, are often used in powder bed fusion processes, because of their high power and efficiency. CO₂ lasers typically emit light with a wavelength of 9.6-10.6 microns, and can have a power output of up to 100 W or even higher. Polyamide and polyester materials that are typically used for powder bed fusion processes, including bio-based and/or biodegradable materials absorb a portion of the light emitted by CO₂ lasers. However, CO₂ lasers are typically large, complex and expensive. Also, CO₂ lasers are very sensitive for proper alignment. This makes CO₂ lasers less suitable for e.g. small companies and home users of that want to use powder bed fusion processes. Therefore, smaller powder bed fusion printers with other types of lasers have recently gained attention. For instance, laser diodes with a wavelength in the near-infrared (NIR) region, *e.g*. around 800 nm, are also used for powder bed fusion. Common wavelengths for such diode lasers are 808 nm, 976 nm, or 1065 nm. Such laser diodes typically have a much lower power output than CO₂ lasers, for instance around 5-30 W. Polyamide and polyester materials typically do not absorb enough light in the NIR region. Therefore, in order to be suitable for powder bed fusion using a NIR laser, the particles are often mixed with a pigment or a dye that absorbs light in the NIR region. However, addition of too much pigment can negatively influence other properties of the powder, such as the mechanical properties of the printed part. In addition, especially when a biodegradable part is made, addition of too much pigments can negatively influence biodegradability. Therefore, it would be beneficial to achieve good NIR absorption while using low amounts of pigment.

Given the increasing use of plastics globally, there exists a strong and growing demand to provide more sustainable solutions. Preliminarily, additive manufacturing techniques facilitate this, as their relatively complex production method offers an enhanced degree of customization and ultimately less waste than traditional manufacturing techniques. Furthermore, as stated, several plastics are readily recyclable, which facilitates multiple functional uses from a given unit of starting material. Yet further, increasingly manufacturers are providing thermoplastic materials from bio-based, rather than petroleum-based, sources. "Bio-based" signifies that a material is synthesized in whole or part from biological origins, such as plants, animals, or micro-organisms.

In addition to the aforementioned approaches, it would also be desirable to increase the utilization of biodegradable or at least compostable plastics. As is widely known, most plastics in use today do not readily degrade or decompose at the conclusion of their useful life, and they are typically disposed of either by incineration or deposition in landfills. Unfortunately, many spent plastics are also increasingly entering the planet's waterways and oceans. Aside from being unsightly, this plastic build-up has a detrimental impact on certain marine life. Thus, it would be especially desirable to source and utilize more plastics that are "biodegradable" - that is, those which may be readily decomposed by living organisms into natural byproducts such as water, carbon dioxide, and biomass.

Many types of biodegradable plastics are known. Biodegradable plastics may originate from bio-based or petroleum-based sources. From a sustainability standpoint, bio-based plastics are typically preferred. Bio-based, biodegradable plastics include polyhydroxyalkanoates (PHAs), polylactic acids (PLAs), blends of starches with other biodegradable plasticizers, and cellulose-based plastics such as certain cellulose esters.

Some attempts at the provision of certain biodegradable, bio-based plastics for 3D printing have been made. US 2019/375149A1, assigned to Tepha Inc., relates to methods to fabricate objects by 3D printing of poly-4-hydroxybutyrate (P4HB) and copolymers thereof. In one method, these objects are produced by continuous fused filament fabrication using an apparatus and conditions that overcome the problems of poor feeding of the filament resulting from the low softening temperature of the filament and heat creep along the fed filament. Methods using an apparatus including a heat sink, a melt tube, a heating block and nozzle, and a transition zone between the heat sink and heating block, with the melt tube extending through the heat sink, transition zone, and heat block to the nozzle are disclosed. 3D objects are also printed by fused pellet deposition (FPD), melt extrusion deposition (MED), selective laser melting (SLM), printing of slurries and solutions using a coagulation bath, and printing using a binding solution and polymer granules.

BRPI1003549A2, assigned to Ct de Tecnologia Da Informacco Renato Archer, describes a solution for the provision of fluffy poly(3-hydroxybutyrate) (P3HB) for scaffolding of implants and/or prototypes.

WO2019/043137A1, assigned to Evonik Rohm Gmbh, is directed to biocompatible polymeric powders (with examples based on polylactic acid (PLA, PLLA) and polycaprolactone (PCL)) to be used for 3D printing applications. More specifically, the 3D printing process shall allow a tool less manufacturing of medical devices in particular in the implantable or regenerative space. Its flow and other processing characteristics shall qualify them for the use in selective laser sintering, but also shall be suitable for other powder based 3D printing technologies.

It is furthermore important that printed articles have good mechanical properties. A problem often encountered with articles that are produced from semicrystalline polymers using injection molding and/or extrusion, is that the physical properties of the article change over time, a process which is sometimes called physical aging. During aging of an article, the material can for instance become harder, which can for instance be observed by an increase in tensile modulus of the material, but also more brittle, which can for instance be observed by a decrease in elongation-at-break. Physical aging may especially be pronounced in articles that are made from polymers having a glass transition temperature (T_{g}) below room temperature, or polymers that are already brittle, such as polyhydroxybutyrates (PHBs). However, other semicrystalline polymers, for instance polybutylene terephthalate (PBT) can also suffer from unwanted physical aging processes.

Even without aging, a disadvantage of polyhydroxyalkanoates, such as polyhydroxybutyrates (*e.g*. P3HB or P4HB) is that they typically have low toughness, or, in other words, tend to be brittle, which means that they can break easily, *e.g*. during transportation. The brittleness and/or low toughness of PHBs can for instance be expressed in terms of the elongation-at-break of articles made from these polymers, which tends to be low.

Thus, despite the foregoing attempts, heretofore an unmet need exists to provide materials for additive manufacturing that can be used for making articles with good mechanical properties and/or good biodegradability properties.

An object of the invention is to provide a powder composition suitable for powder bed fusion additive manufacturing processes, that can be printed effectively using a radiation source, such as a laser, having low power, for instance a NIR laser, preferably without having to incorporate large amounts of additives such as pigments.

Another object of the invention is to provide powders from which articles with good mechanical properties, such as good toughness can be produced, especially using additive manufacturing processes.

Another object of the invention is to provide powders for additive manufacturing processes that enable the utilization of the benefits of biodegradable (or compostable), biobased materials such as polyhydroxyalkanoates, and that offer improved usability and/or performance, such as via improved printability, flowability, and/or mechanical properties of the objects created therefrom.

Another object of the invention is to provide powder compositions and/or methods using which articles can be produced that are less brittle, and/or have higher toughness than articles produced using known processes and powder compositions of the same type polymer.

### Summary of the invention

The inventors have surprisingly found that these objectives can be met, at least in part, by dry blending a semicrystalline polymer with a pigment, using high shear.

Therefore, in accordance with a first aspect the present invention, there is provided a method for manufacturing a powder composition having a D50 particle size value of 20-150 microns suitable for powder bed fusion additive manufacturing processes, comprising the steps of: (a) providing a particulate starting material comprising a semicrystalline polymer; (b) optionally, compacting the starting material with a compacting pressure of > 5 kN/cm², thereby obtaining a compacted material; (c) optionally, reducing the size of the particulate starting material or the compacted material; (d) dry blending the starting material, the compacted material, or the size-reduced material with a pigment using high shear mixing; (e) optionally, size fractionating the starting material, the compacted material, the size-reduced material and/or the dry blended material.

The inventors have found that powder compositions that are made using a method that involves mixing a starting material comprising a semicrystalline polymer with a pigment using a high shear mixing can be used to produce articles with improved toughness using additive manufacturing. In addition, in powder compositions prepared using the method according to the first aspect of the invention, less pigment is needed in order to absorb the same amount of electromagnetic radiation in the near-infrared compared to powder compositions prepared using other methods.

According to a second aspect of the invention, there is provided a powder composition having a D50 particle size value of 20-150 microns, suitable for additive manufacturing powder bed fusion processes, comprising a semicrystalline polymer and a pigment, wherein the powder composition has a reflectance at 800 nm of 50 % or less, preferably 40 % or less, more preferably 30 % or less, such as 25 % or less.

A third aspect of the invention is directed to an additive manufacturing method for producing a three-dimensional article, comprising the step of subjecting a powder composition according to the second aspect to powder bed fusion.

According to a fourth aspect, there is provided an article comprising a semicrystalline polymer and a pigment, obtainable by an additive manufacturing method according to the third aspect.

### Brief description of the drawings

Figure 1 shows the reflectance in the near-infrared during mixing polybutylene terephthalate with a pigment using a cyclomixer.
Figure 2 shows the reflectance in the near-infrared during mixing polybutylene terephthalate with a pigment using a Nauta^{®} Minimix.
Figure 3 shows the reflectance in the near-infrared during mixing polybutylene terephthalate with a pigment using a conical paddle mixer (CPM).
Figure 4 shows photographs of the powders of example 1 after different mixing times for visual comparison of the color, which can be indicative of the absorption in the near-infrared region.
Figure 5 shows the reflectance in the near-infrared after mixing poly(3-hydroxybutyrate-co-3-hydroxyvalerate) with a pigment using various mixers.
Figure 6 shows the reflectance in the near-infrared after mixing poly(3-hydroxybutyrate-co-3-hydroxyhexanoate)with a pigment using various mixers and settings.
Figure 7 shows the reflectance in the near-infrared after mixing polypropylene with a pigment using a Klarstein mixer at various settings.

### Detailed description of the invention

In the method according to the first aspect of the invention, a starting material is provided. The starting material is a semicrystalline polymer that is suitable for powder bed fusion additive manufacturing process.

In embodiments, the semicrystalline polymer is selected from the group consisting of polyesters, polyolefins, polyamides, and combinations thereof, because these types of polymers are especially suitable for additive manufacturing.

Preferably, the semicrystalline polymer has a melting point of 80 - 300 °C, more preferably 100-250 °C, for instance 120-200 °C, or 200-240 °C.

Preferably, as used herein, melt behavior of materials, such as melting peak temperature, melting onset temperature, and crystallization onset temperature are measured according to ISO 11357-1/3. Unless otherwise indicated, the terms melting point and melting temperature refer to the melting peak temperature of a material.

Preferably, the semicrystalline polymer is biodegradable and/or compostable. Examples of semicrystalline polymers that are biodegradable and/or compostable as well as suitable for powder bed fusion additive manufacturing include polyesters and poly(ester amides).

In embodiments, the semicrystalline polymer is polybutylene terephthalate or a copolymer thereof. Advantages of using polybutylene terephthalate or a copolymer thereof include that this material typically has a high heat deflection temperature (HDT), low moisture absorption, and high dimensional stability. In addition, PBT has good electrical properties, such as low conductivity, and high breakthrough voltage.

In embodiments, the semicrystalline polymer is a polyolefin, preferably polypropylene or polyethylene.

In other embodiments, the semicrystalline polymer is a homopolymer or copolymer of 3-hydroxy butyric acid. 3-hydroxy butyric acid, also known as β-Hydroxybutyric acid, is an organic compound and a beta hydroxy acid with the chemical formula CH3CH(OH)CH2CO2H; its conjugate base is β-hydroxybutyrate, also known as 3-hydroxybutyrate. β-Hydroxybutyric acid is a chiral compound with two enantiomers: D-β-hydroxybutyric acid and L-β-hydroxybutyric acid. Its oxidized and polymeric derivatives occur widely in nature. 3-hydroxy butyric acid is a precursor to poly(3-hydroxybutyrate) (P3HB), which is a biodegradable polyester. The chemical structure of P3HB is depicted below:

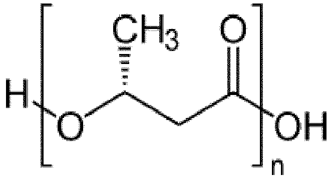

In a preferred embodiment, the starting material comprises, consists of, or consists essentially of a P3HB polymer. At standard temperature and pressure, the P3HB polymer may take any suitable form, such as a powder, flake, or granule. Of these, powders are preferred.

In embodiments, the particulate starting material comprises a homopolymer or copolymer of 3-hydroxy butyric acid. In various embodiments, the starting material comprises a (co)polymer of 3-hydroxy butyric acid and an additional acid. The additional acid may be of any suitable type which assures compatibility and biodegradability of the resultant polymer, but particularly preferred additional acids include 3-hydroxy hexanoic acid, 3-hydroxy valeric acid and 4-hydroxy butyric acid. As used herein, copolymers of 3-hydroxy butyric acid and 3-hydroxy hexanoic acid are referred to as "PHBH", whereas copolymers of 3-hydroxy butyric acid and 3-hydroxy valeric acid are referred to as "PHBV". Copolymers of 3-hydroxy butyric acid and 4-hydroxy butyric acid are referred to as "P3HB4HB". Furthermore, as used herein, the general nomenclature for a homopolymer of 3-hydroxy butyric acid, or a copolymer of 3-hydroxy butyric acid with any additional acid(s) is referred to herein under the general nomenclature "PHBx".

If used, the comonomers may be incorporated into the 3-hydroxy butyric acid in any quantity relative to each other as is desired, such as in an amount from 1 to 50 mol%, preferably 1 to 15 mol%, more preferably 5 to 12 mol%.

In an embodiment, the method according to the first aspect of the invention involves the optional step of reducing the size of the starting material to form an size reduced material with, *i*.*a*, a desired average particle size or particle size distribution. This step is necessary if the starting material is in the form of flakes, granules, or another powder with an average particle size that is larger than the desired end average particle size of the ultimate build material for the specified additive manufacturing process.

The size reduction may include a milling or micronizing process to provide a particle size suitable for the intended printing process. Milling can be done at or around room temperature (*e.g*. 10 to 30 °C) but may be lower for other methods such as cryogenic milling. With cryogenic milling, or cryo-milling, the polymer is cooled down with liquid nitrogen (alternatives to N₂ include solid or liquid carbon dioxide) to prevent softening and clogging of the apparatus during milling.

Other well-known milling techniques include jet milling and mechanical milling. Jet milling processes, for example, grind materials by using a high-speed jet of compressed air or inert gas to impact particles into each other. Jet mills can be designed or used to output particles below a certain size, while continuously milling particles above that size, resulting in a narrow size distribution of the resulting product. Particles leaving the mill can be separated from the gas stream by cyclonic separation.

Milling techniques, especially mechanical milling, may be carried out in a pinned-disk mill, a fluidized-bed opposed jet mill, or a baffle-plate impact mill. Regardless of the milling technique and equipment used (all of which is well-known in the art to which this invention applies), the process should be carried out such that the resulting particle size distribution has a median particle size D50 is in the range from 1 to 650 microns, or more preferably from 1 to 400 microns, or for example, 10 to 200 microns, 20 to 100 microns, or 40 to 50 microns. Median particle size D50 may be determined via various methods, including TEM, SEM, dynamic light scattering, and static light scattering. A non-limiting example of a suitable device for measuring the particle size includes the LB-550 machine, which is available from Horiba Instruments, Inc., and which measures the particle diameter by dynamic light scattering. A preferred method for determining D50 median particle size is via laser diffraction particle size analysis in accordance with ISO 13320-1. In particular, particle size analysis using a SYMPATEC HELOS/H3982 can be used to determine the particle size distribution.

In a preferred embodiment, the starting material or the size reduced starting material has a particle size distribution with a D50 particle size in the range of 20 to 100 microns, or 30 to 90 microns, or 30 to 80 microns, or 40 to 90 microns, or 40 to 80 microns, or from 40 to 50 microns. A narrow particle size distribution having a mean particle at the sizes listed is desirable because it tends to improve the flowability of the ultimate powder created therefrom. This ensures superior processing and a reduction in agglomeration when such powder is used in powder-based additive manufacturing processes, such as multi-jet fusion or selective laser sintering.

In a preferred embodiment, the size reduction step comprises a jet milling or mechanical grinding process, wherein the jet milling or mechanical grinding process is carried out at a temperature of 15 to 35 °C, or from 15 to 30 °C.

If the particle size distribution of the starting material, the size reduced material or mixed material is too broad, or if a narrower particle size distribution is desired, it is possible to perform a size fractionation step in order to obtain a narrower particle size distribution. Size fractionation may be conducted one or more times so as to select a subset of the particles, flakes, or granules contained in the material for further operation or use. This is typically achieved via sifting or sieving, and the apparatus for sifting and/or sieving may be selected with one or more screens or partitions so as to filter out particles above and/or below any specified size. In an embodiment, the starting material is sieved to assure that particles below 30 microns and above 100 microns are not maintained to any substantial degree. Size fractionation may be performed at any point or points along the process, but it is commonly carried out on the starting material or after the size reduction step, or it is not performed at all. In an alternative embodiment, the size fractionation step is performed prior to or after more than one step in the process, or even prior to or after each step in the process. Preferably, size fractionation is performed as a final step to assure the obtained powder composition is optimized for suitability as a powdered build material for use in additive manufacturing processes.

The starting material or the size-reduced material is mixed with a pigment using high shear mixing. High shear mixing refers to any mixing in which the solid material is subjected to substantial amounts of shear. This can be achieved using a wide range of different type of mixers. Suitable mixers for high shear mixing include conical screw mixers, also known as Nauta^{®} mixers; conical paddle mixers; and cyclomixers. A suitable way to determine the amount of shear provided by mixers with a rotating element, such as paddle mixers, blade mixers or screw mixers is the tip speed of the rotating element. Preferably, high shear mixing comprises mixing using a rotating element having a tip speed of at least 1.0 m/s, more preferably 3.0 m/s, even more preferably 5.0 m/s or more. The tip speed may be as high as 200 m/s, but will typically be lower than that, for instance 50 m/s or less, such as 10-40 m/s, or 15-30 m/s. Apart from mixers with a rotating element, other types of equipment, for instance shakers, may also be used for high shear mixing. In order to determine whether mixing using a different type of mixer than a mixer with a rotating element qualifies as high shear mixing in the context of this invention, the performance of such a non-rotating mixer can be compared to a mixer with a rotating element (e.g., a conical paddle mixer from Hosogawa Micron) by comparing the NIR reflectance over time, using the procedure as described in example 1.

The high shear mixing can comprise one or more mixing steps. For instance, the high shear mixing can comprise a step of mixing the starting material or the size reduced material with the pigment in a low-shear mixer (*e.g*. a Lödige mixer), followed by a step of mixing using high shear.

Preferably, the pigment absorbs light in the near-infrared region of the electromagnetic spectrum. This means that the powder composition can be heated effectively by irradiation with a NIR laser. Preferably, the pigment has a reflectivity at 800 nm of 20 % or less, preferably 10 % or less. The pigment may for instance be selected from the group consisting of carbon black, ultramarine blue, iron oxides, organic pigments, and combinations thereof. Examples of organic pigments include phthalocyanines, perylenes, azo compounds, isoindolines, quinophthalones, diketopyrrolopyrroles, quinacridones, dioxazines, and indanthrones.

In order to further improve mixing between the semicrystalline polymer and the pigment, surface-modified pigments can be used. For instance, unmodified carbon black is typically hydrophobic, but carbon black that is surface-modified to be more hydrophilic can also be used as pigment. Depending on the type of semicrystalline polymer, surface-modified pigments may provide better mixing between pigment and polymer. Suitable types of carbon black can for instance be obtained from Cabot Corporation, and include TPK 1099R (unmodified), as well as TPK 1227R and TPK 1104R (both modified).

It is preferred to use low amounts of pigment in the powder composition, because using too much pigment can negatively influence the mechanical properties of articles that are printed using the powder composition. It is believed that the presence of too much pigment may decrease the area of contact between adjacent powder particles, which may negatively affect mechanical properties. Therefore, in embodiments, the amount of pigment mixed with the starting material or the size reduced material is 2 % by weight or less relative to the total weight of the powder composition, preferably 1.5 wt.% or less, more preferably 1 wt.% or less, even more preferably 0.5 wt.% or less, such as 0.4 wt.% or less, or even 0.3 wt.% or less. The amount of pigment may even be as low as 0.05 wt.%, but will typically be higher.

After mixing the starting material or the size reduced material with the pigment, it is preferred that the resulting powder composition has a reflectance of 50 % or less, preferably 40 % or less, more preferably 30 % or less. For instance, the reflectance of the powder composition may be 1-45 %, or 5-35 %, or 10-30 %.

Using high shear mixing, it is possible to produce a powder composition with lower NIR reflectance compared to low shear mixing when using the same materials, and/or the minimum NIR reflectance can be achieved in a shorter amount of time. Long mixing times are unwanted, because of economic reasons and because they slow down production of the powder composition. Therefore, preferably, the high shear mixing step is performed for 90 minutes or less, more preferably 60 minutes or less, even more preferably 30 minutes or less. For instance, the high shear mixing step is performed for 0.5-15 minutes, or 1-10 minutes.

In addition to mixing the starting material or the size reduced material with a pigment, one or more other compositional additives can also be added to the composition. If such additives are included, the resulting powder composition will comprise the product of the processed starting material (such as a homo- or copolymer of 3-hydroxy butyric acid), a pigment, and one or more additive components.

Such additives may be any suitable additive used for 3D printing without limitation, such as flame retardants, flow aids, fillers, additional pigments, nucleation agents such as boron nitride, antioxidants, and/or stabilizers. Suitable flow aids include fumed silicas, precipitated silicas; suitable fillers include glass particles and glass fibers (having a length of no more than 100 microns, but preferably less), micro cellulose fibers, cellulose nanocrystals, glass beads, metal particles, and ceramic particles; and stabilizers such as heat stabilizers and UV-stabilizers. These additives may be added to the powder composition before, during, or after the high shear mixing step. If used, in an embodiment, one or more flow aids may be included in an amount from 0.05 to 20 wt.%, relative to the entire particulate composition.

In view of the mechanical properties of articles printed from the powder composition, and in case the semicrystalline polymer is biodegradable, also in view of biodegradability of the powder composition and articles made thereof, it is preferred that the amount of pigment and the amount of other additives is low compared to the amount of semicrystalline polymer. Therefore, preferably, the amount of semicrystalline polymer relative to the total weight of the resulting powder composition is 80 % or more, more preferably 90 wt.% or more, even more preferably 95 wt.% or more. The amount of semicrystalline polymer in the powder composition may even be as high as 99.95 wt.%. For instance, the amount of semicrystalline polymer in the powder composition may be 92-99 wt.% or 94-97 wt.%.

In addition to the providing, size reducing, and mixing steps, additional steps may also be used in the method for manufacturing a powder composition according to the first aspect. Such steps may be included before, between, or after any of the aforementioned steps as desired, and they may be performed once or more than once.

In some embodiments according to the first aspect, the starting material is first subjected to a compacting step in order to increase the free bulk density (FBD) of the starting material. In a preferred embodiment, the compacting is carried out by any suitable apparatus for compacting such materials, including, for example a Bepex Labor Kompaktor. The force and/or pressure applied to the starting material may vary as desired, but in a preferred embodiment, the compacting is carried out such that it imparts a pressure of greater than 5 kN/cm², more preferably greater than 25 kN/cm², more preferably greater than 40 kN/cm², or from 5 - 400 kN/cm², or from 25 - 300 kN/cm², or from 40 - 200 kN/cm² on the material. Inventors have surprisingly discovered that the beneficial effects of this compacting step remain with the starting material even after the subsequent downstream processes described elsewhere herein such that the resulting processed material possesses enhanced suitability for use in additive manufacturing applications. If a compacting step is performed, it is preferably performed prior to size reduction and/or mixing of the starting material or size reduced material with a pigment.

For instance, if the starting material comprises low-density PHBx, compacting the starting material may be performed in order to obtain PHBx with a density of 0.4 g/mL or higher, preferably 0.5 g/mL or higher, such as 0.5-0.8 g/mL.

According to some embodiments of the first aspect, the starting material may be heated to produce an annealed material. Preferably, such a heating step heats the material to a temperature sufficient to prevent sticking of the compacted material. The heating process preferably involves annealing in the sense that the material is heated up to some temperature below its glass transition temperature or peak melting temperature for a moderate period of time, after which it is allowed to cool again in order to reduce internal stresses therein, and in order to increase the melting onset temperature. Preferably, if performed, the heating step is performed before the mixing step. If a compacting step is also performed, the heating step is preferably performed after the compacting step. The heating step can be performed before a size reduction step (*e.g.* on granules) and/or after the size reduction step, *i*.*e*., on the powder.

The method of heating will differ according to several factors as will be appreciated by the skilled artisan to which this invention relates, including but not limited to the desired quantity of material to be heat-treated. Overarching common techniques involve batch and continuous heating. Batch heating typically involves forced convection in an oven, although for lab-scale quantities, other methods may be employed, such as the insertion of a rotating flask containing the material into a hot oil bath under vacuum, *e.g*. by use of a rotavapor, while purging with an inert gas or a tumble dryer. Continuous heating, meanwhile, typically involves passing the material along a conveyor in a heated tube or chamber. This method allows for less restricted air flow and is more suitable for industrial scale heating processes. Whether batch or continuous heating processes are utilized, other heating methods, such via the application of infrared radiation, may be employed as a substitute for the aforementioned convection heating.

Regardless of the general technique, the process will typically involve heating the material to a (i) desired temperature at a (ii) controlled rate, maintaining this desired temperature for (iii) a specified period of time, and then cooling the material at a (iv) controlled rate to a (v) final temperature. Any of (i) - (v) can vary as desired as will be appreciated by the skilled artisan, it being understood further that different PHBx polymers will necessitate varying conditions as they will possess intrinsically different material characteristics.

In various embodiments, however, (i) is selected as being up to 120 °C, or 130 °C, or 135 °C, or 140°C, or 150 °C, or 160°C, or 170 °C. The ultimate desired temperature (i) should be selected so as not to exceed the peak melting temperature for the material being utilized, although it may at least briefly exceed material's melting point onset temperature (T_{m,onset}). In other embodiments, (i) may vary depending on the material, such as from 100 to 200 °C, or from 120 to 180 °C, or from 130 to 160 °C.

Despite the ultimate heating temperature, a variety of (ii) heating rates may be selected, such as from 1 °C / h to 100 °C / h, or from 2 °C / h to 25 °C / h, more preferably 5 °C / h to 10 °C / h, although other rates may be employed as suitable. The rate of (ii) heating is not necessarily as important as (i) or (iii), provided that the material is heated evenly and does not exceed the peak melting temperature locally. Of course, it will be appreciated that a rapid heating is desired to minimize the overall processing time.

Furthermore, it is appreciated that the heating may occur continuously or in a step-wise processes; that is, the material may be heated to a certain intermediate value below the ultimate desired peak temperature (i) , maintained there for a specified period of time, then ramped up further again as appropriate. This stepwise process may occur in the presence of two or more than two so-called intermediate desired temperatures with one, two, or more than two intermediate maintenance times in between.

Once the ultimate desired temperature (i) is achieved, the material may be maintained at such temperature for any specified length of time (iii). In an embodiment, (iii) is from 1 minute to 4 hours, or from 30 minutes to 2 hours.

Eventually, the material is preferably cooled from the desired temperature back down to an equilibrium temperature for use in processing the material further. This cooling can occur at any rate (iv), it being understood that the cooling may be continuous or in a stepwise fashion and might be under application of an N2 atmosphere and / or under reduced pressure. The final equilibrium temperature (v), meanwhile, is preferably at or near ambient or room temperature.

Using the method according to the first aspect, powder compositions can be produced that, when an article is produced from such a powder composition by means of additive manufacturing, can lead to articles with improved mechanical properties. In particular, the toughness of articles produced from the obtained powder compositions can be increased, or, in other words, the brittleness of such articles can be reduced. In embodiments, a test article obtained by powder bed fusion of the powder composition resulting from the method according to the first aspect has an elongation-at-break of more than 4 %, measured according to ISO 527. Preferably, the elongation-at-break of such a test article is 5 % or more, more preferably 8 % or more, even more preferably 10 % or more, such as 15 % or more, or even 20 % or more. The elongation-at-break may even be as high as 50 %.

Surprisingly, the elongation-at-break at break of an article that is made using additive manufacturing from a powder obtained using the method according to the first aspect may even be higher than the elongation-at-break of an article that is made by injection molding from the same starting material. Without wishing to be bound by theory, the inventors believe that increased toughness or elongation-at-break of such articles may be caused by improved heating of adjacent semicrystalline polymer particles in the powder bed, which is caused by the high shear mixing of the semicrystalline polymer material and the pigment. The high shear mixing of the semicrystalline polymer material and the pigment also results in lower amounts of pigment being needed in order to reach the desired level of reflectance of the powder composition, which in turn may lead to more intimate contact between adjacent particles in the powder bed. This intimate contact between adjacent particles could lead to improved fusion of the particles and therefore to improved mechanical properties. Pigments can sometimes serve as flow additive and increase the density of the powder bed, but addition of too much of flow additives such as pigments can decrease contact between adjacent particles. Another possible cause for the improved toughness compared to injection molded articles is that articles made using injection molding and/or extrusion typically cool down quickly after being produced, which can result in incomplete crystallization of the semicrystalline polymer. By layerwise additive manufacturing of powders that are made using the method as described herein, only a small part of the article is melted at a time, meaning that there is typically more time for the molten material to cool down slowly and crystallize in an orderly fashion, which can result in improved mechanical properties, in particular a decrease in brittleness.

According to a second aspect of the invention, there is provided a powder composition having a D50 particle size value of 20-150 microns, suitable for additive manufacturing powder bed fusion processes, comprising a semicrystalline polymer and a pigment, wherein the powder composition has a reflectance at 800 nm of 50 % or less. Preferably, the powder composition has a reflectance at 800 nm of 40 % or less, more preferably 30 % or less, 25 % or less, or 20 % or less, even more preferably 18 % or less, 15 % or less, such as 13 % or less. The low reflectance at 800 nm makes the powder suitable to be printed with NIR lasers, even when the NIR laser has a low output power.

To maximize suitability for use in various additive manufacturing processes, the powder composition of the second aspect desirably is configured to possess certain particle sizes and particle size distributions. It is known to those skilled in the art that specific particle size distributions may facilitate optimal processability and flowability in additive manufacturing processes. The powder composition has a D50 particle size value of 20-150 microns. Preferably, the powder composition possesses a D50 particle size in the range from 30 to 100 microns, or from 20 to 50 microns, or from 40 to 50 microns. Excessively small particles, such as those below about 20 microns, may inhibit the flowability of the powder particles. Conversely, depending upon the application requirements, the ultimate printed object resolution suffers if the particles tend to become too large, such as, for example, above 50 microns. Furthermore, particles that are too large also tend not to pack sufficiently, and therefore voids may be introduced into the objects fused therefrom.

For particle size distributions the median is called the D50 (or x50 when following certain ISO guidelines). The D50 is the size (specified herein in microns unless otherwise stated) that splits the distribution with half above and half below this diameter. As used in embodiments of the third aspect herein, the particle size distribution and D50 particle size are determined according by laser diffraction particle size analysis in accordance with ISO 13320-1. Other related terms correspond to the median value of other ways of analyzing a distribution of particles. The Dv50 (or Dv0.5), for instance, is the median for a volume distribution. Likewise, Dn50 is used for number distributions, and Ds50 is used for surface distributions. Since the primary result from laser diffraction is a volume distribution, the default D50 cited is the volume median and D50 typically refers to the Dv50 without including the "v." Similarly, other values like D10 and D90, which are also used herein, follow a similar nomenclature, and pertain to the 10^{th} and 90^{th} percentile of particle sizes by volume distribution, respectively.

In an embodiment, therefore, the powder composition possesses a D10 value of at least 15 microns, or at least 20 microns, or at least 30 microns, and / or a D90 value of less than 140 microns, or less than 100 microns, or less than 80 microns.

The particle sizes and/or particle size distributions may be tailored as needed via a variety of methods, including those described elsewhere herein with respect to the first aspect of the invention. Specifically, the fractionation step described with respect to the first aspect may be particularly useful for narrowing the particle size distribution, whereas the size reduction step discussed above may be particularly useful at reducing the average particle size. Of course, it is contemplated that a combination of size reduction and fractionation, among other methods, may be employed to engineer a powder composition according to specific design requirements.

There is also provided an additive manufacturing method for producing a three-dimensional article, comprising the step of subjecting a powder composition as described herein to powder bed fusion.

Preferably, the temperature of the powder bed is between the crystallization onset temperature and the melting onset temperature of the mixed material. Temperatures too close to or lower than the crystallization onset may lead to curling of parts during the print process. Bed temperatures that are too far into the melting endotherm may lead to hard powder cakes and poor powder recyclability. The laser power and scan strategy should be sufficient to properly melt the material leading to fusion of the material. Typical irradiation values range from 100 mW/mm³ to 1000 mW/mm³, depending on the type of material. The skilled person in aware that these irradiation values can be achieved using different combinations of laser intensity, number of scans, hatch distance and layer thickness.

The additive manufacturing method may include irradiating the powder bed with a laser. Preferably, the laser emits light in the near-infrared (NIR) region. Particularly, the laser may have a wavelength in the range of 800-1000 nm.

There is also provided an article comprising a homopolymer or copolymer of 3-hydroxy butyric acid and a pigment, having an elongation-at-break of more than 4 %, measured according to ISO 527.

Preferably, the elongation-at-break is 5 % or more, more preferably 8 % or more, even more preferably 10 % or more, such as 15 % or more, or even 20 % or more. The elongation-at-break may even be as high as 50 %, but will typically be lower than that.

The article may be obtained using an additive manufacturing method according to the third aspect of the invention, and/or using a powder composition according to the second aspect of the invention.

Preferably, the tensile modulus of the article is 800 MPa or higher according to ISO 527-1/2, more preferably 1000 MPa or higher, even more preferably 1500 MPa or higher or 2000 MPa or higher. In embodiments, the tensile modulus of the article is 800-3500 MPa, or 1000-3000 MPa .
The ultimate tensile strength of the article is preferably 10 MPa or higher according to ISO 527-1/2, more preferably 15 MPa or higher, even more preferably 20 MPa or higher. For instance, the ultimate tensile strength may be 15-50 MPa, or 18-35 MPa.

### Examples

### Example 1.

Polybutylene terephthalate (PBT) was mixed with carbon black as a pigment in different types of mixers, which provide different amounts of shear. The PBT was obtained from DSM (Arnite^{®} T AM1210 (P)) and was in the form of particles with a particle size of 60 µm (D50). The carbon black was TPK 1099R obtained from Cabot and was in the form of agglomerates comprising primary particles of ca. 80 nm.

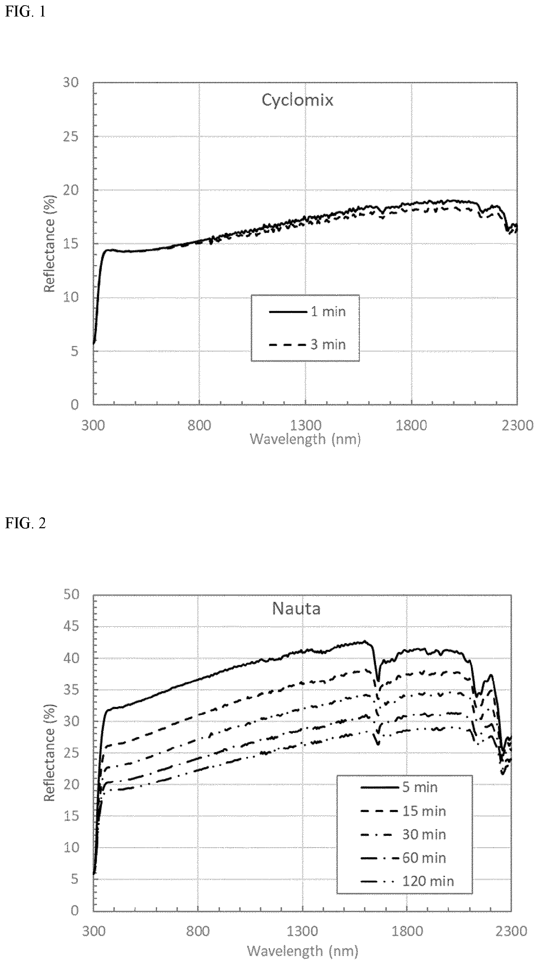

Experiment 1-1: In a 50 L Cyclomix high impact shear mixer from Hosokawa Micron B.V., 20 kg of PBT and 0.5 wt.% of carbon black were mixed. After premixing for 10 s at 100 rpm and 10 s at 250 rpm, the ingredients were mixed at 750 rpm, corresponding to a tip speed of 20 m/s. The NIR-reflectance of the mixture was measured after premixing and after 1, 2, and 3 minutes of mixing at 750 rpm, using a Perkin Elmer lambda 1050 spectrophotometer equipped with a 150 mm integrating sphere. The powder samples were measured in a cuvette. The results are shown in figure 1. It can be seen that using the Cyclomix, which is a high hear mixer, the minimum NIR reflection was reached after ca. 2 minutes.

Experiment 1-2: In a 10 L Nauta Minimix from Hosokawa Micron B.V., 5 kg of PBT and 0.5 wt.% of carbon black were mixed. The ingredients were mixed at 300 rpm, which corresponds to a tip speed of 0.8 m/s. The NIR-reflectance of the mixture was measured after premixing and after 5, 15, 30, 60, and 120 minutes of mixing at 300 rpm, and the results are shown in figure 2. It can be seen that using the Nauta Minimix, which is a low shear mixer, the minimum NIR reflection was only reached after 120 minutes, compared to ca. 2 minutes in experiment 1-1.

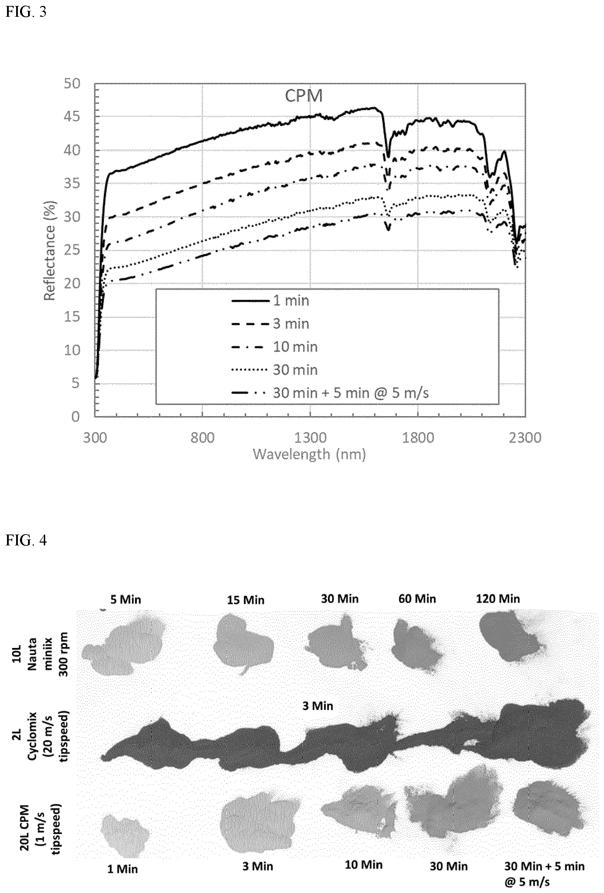

Experiment 1-3: In a 20 L conical paddle mixer (CPM) from Hosokawa Micron B.V., 5 kg of PBT and 0.5 wt.% of carbon black were mixed. The ingredients were mixed using a tip speed of 1 m/s. The NIR-reflectance of the mixture was measured after premixing and after 1, 3, 10, and 30 minutes. After 30 minutes of mixing at a tip speed of 1 m/s, the tip speed was increased to 5 m/s and the mixture was stirred for another 5 minutes. The results are shown in figure 3. It can be seen that using the conical paddle mixer, which provides high shear, but not as high as the Cyclomix, the minimum NIR reflection was only reached after 30 minutes at a tip speed of 1 m/s followed by 5 minutes at a tip speed of 5 m/s. Figure 4 shows photographs of the powders after different mixing times for visual comparison of the color, which can be indicative of the absorption in the near-infrared region.

### Example 2.

Different powder compositions based on PHBV were produced, in which the starting material, mixing procedure, as well as the amount and type of pigment were varied.

PHBV-1 powder was made via cryogenic milling of PHBV Enmat 1000P (Helian Polymers NL) granulate in the presence of silica flow additive Aerosil 0. 2% R812 (Evonik GE). By sieving the over a 100 µm sieve, powder with a particle size D10, D50, D90 of respectively 21, 55 and 112 µm was obtained.

PHBV-2 powder was made via cryogenic milling of PHBV Enmat 1000P (Helian Polymers NL) granulate in the presence of silica flow additive Aerosil 0. 2% R812 (Evonik GE). By sieving the over a 62 µm sieve powder with a particle size D10, D50, D90 of respectively 18, 46 and 83 µm was obtained.

The PHBV powders were mixed with different types of carbon black and using different types of mixing. In sample nos. 2-6, carbon black TPK 1227R was used. In sample no. 7, carbon black TPK 1099R was used and in sample 8, TPK 1104R was used. All carbon black was supplied by Cabot (US). These carbon blacks differ from each other in surface modification.

Sample no. 2 was mixed using a Buchi Rotavapor. Sample no. 3 was mixed using a Lödige Kompaktor Type L200/50 G+K. Sample no. 3b received the same mixing as sample no. 3, followed by mixing in a Blokker blender BL-13202 at setting 5 for 3 minutes, while shaking and tilting the blender sideward by hand. Sample no. 4 was mixed with a Henschel mixer FM 40D. Sample nos. 5-8 were mixed using a Klarstein GrandPrix for 3 min at setting 12.

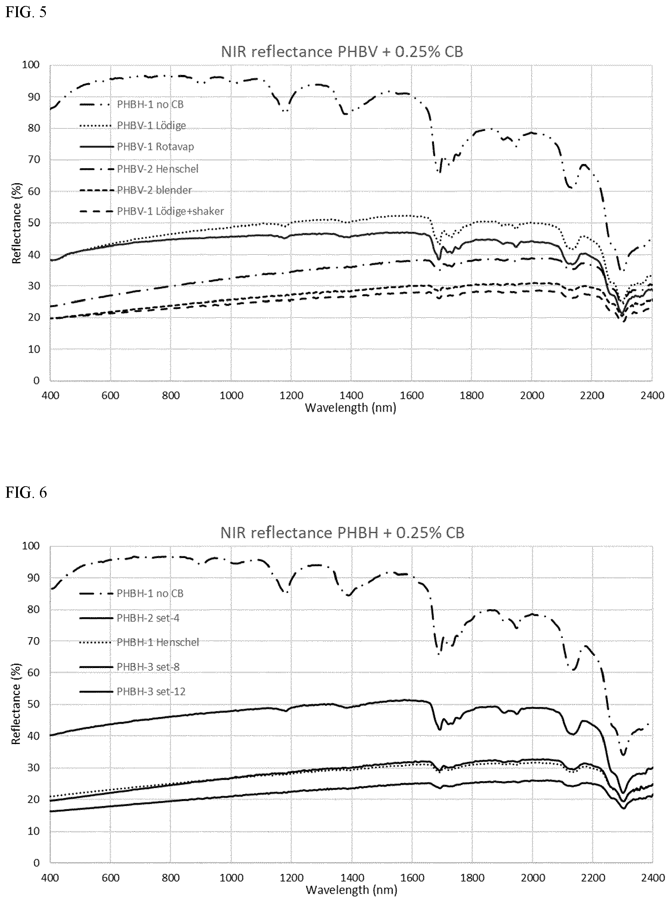

The NIR reflectance of the difference samples was measured over a range of 400 to 2400 nm as shown in figure 5. The 800 nm value is displayed in table 1, since the Lisa Pro SLS printer uses a 808nm diode laser. The results show that in order to obtain a powder with low reflectance, high shear mixing is needed.

**Table 1. PHBV powders preparation**

| Sample no. | Powder | Amount of CB (wt.%) | Type of CB | Mixer type | Mixing duration and setting | Tip speed (m/s) | Reflect @ 800 nm (%) |
|---|---|---|---|---|---|---|---|
| 1 | PHBV-1 | 0 | | | | | 97 |
| 2 | PHBV-1 | 0.5 | TPK 1227R | Rotavapor | | very low | 45 |
| 3 | PHBV-1 | 0.25 | TPK 1227R | Lödige | 15 min @ 50 rpm | 0.76 | 46 |
| 3b | PHBV-1 | 0.25 | TPK 1227R | Lödige + shaker | 3 min @ 5 | 30 | 23 |
| 4 | PHBV-2 | 0.25 | TPK 1227R | Henschel | 5 min @ 1000 rpm | 17 | 30 |
| 5 | PHBV-2 | 0.25 | TPK 1227R | Klarstein | 3 min @ 12 | 30 | 24 |
| 6 | PHBV-1 | 0.25 | TPK 1227R | Klarstein | 3 min @ 12 | 30 | 23 |
| 7 | PHBV-1 | 0.25 | TPK 1099R | Klarstein | 3 min @ 12 | 30 | 24 |
| 8 | PHBV-1 | 0.25 | TPK 1104R | Klarstein | 3 min @ 12 | 30 | 28 |

### Example 3.

PHBH-1 powder was made via cryogenic milling of PHBH X331N (Kaneka Belgium) granulate. By sieving the over a 100 µm sieve, powder with a particle size D10, D50, D90 of respectively 27, 62 and 120 µm was obtained.

PHBH-2 powder was made via cryogenic milling of PHBH X331A (Kaneka Belgium) granulate in the presence of silica flow additives Aerosil 0. 2% R812 and 22S (Evonik GE). By sieving the over a 100 µm sieve, powder with a particle size D10, D50, D90 of respectively 30, 67 and 117 µm was obtained.

PHBH-3 powder was made via cryogenic milling of PHBH X 131A (Kaneka Belgium) granulate in the presence of silica flow additives Aerosil 0. 2% R812 and 22S (Evonik GE). By sieving the over a 100 µm sieve, powder with a particle size D10, D50, D90 of respectively 31, 68 and 119 µm was obtained.

The PHBH powders were mixed with carbon black TPK 1227R supplied by Cabot (US) with a Klarstein GrandPrix for 3 minutes at various settings, resulting in a different tip speed, as shown in table 2. The NIR reflectance was measured over a range of 400 to 2400 nm as shown in figure 6. The 800 nm value is displayed in table 2 since the Lisa Pro printer uses a 808nm diode laser. The results show that mixing at higher tip speeds results in lower reflectance.

**Table 2. PHBH powders preparation**

| Sample no. | Powder | Amount of CB (wt.%) | Type of CB | Mixer type | Mixing duration and setting | Tip speed (m/s) | Reflect @ 800 nm (%) |
|---|---|---|---|---|---|---|---|
| 9 | PHBH-1 | 0 | | | | | 97 |
| 10 | PHBH-2 | 0.25 | TPK 1227R | Klarstein | 3 min @ 4 | 3.5 | 46.1 |
| 11 | PHBH-2 | 0.25 | TPK 1227R | Klarstein | 3 min @ 6 | 7.5 | n.d. |
| 12 | PHBH-3 | 0.25 | TPK 1227R | Klarstein | 3 min @ 8 | 16 | 25 |
| 13 | PHBH-3 | 0.25 | TPK 1227R | Klarstein | 3 min @ 12 | 31 | 19 |
| 14 | PHBH-1 | 0.25 | TPK 1227R | Henschel | 5 min @ 1000 rpm | 17 | 25 |
| 15 | PHBH-1 | 0.25 | TPK 1227R | Klarstein | 3 min @ 12 | 31 | n.d. |

### Example 4.

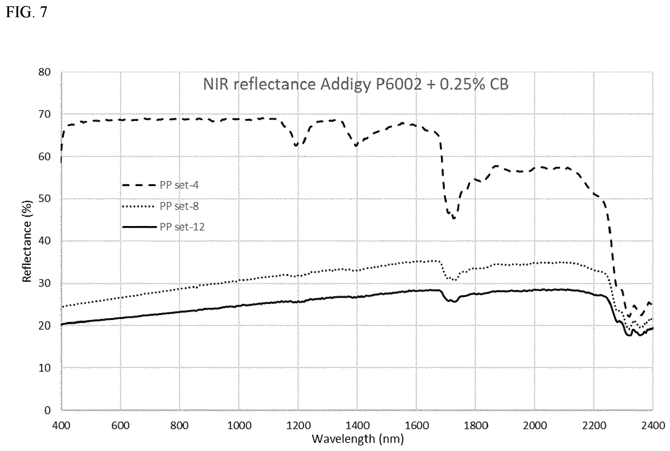

Addigy P6002 a polypropylene powder for selective laser sintering (SLS) supplied by Covestro Additive Manufacturing (GE) was mixed with carbon black TPK 1227R supplied by Cabot (US) with a Klarstein thermomixer for 3 min at various settings according to conditions in table 3. The NIR reflectance was measured over a range of 400 to 2400 nm as shown in figure 7. The 800 nm value is displayed in table 3 since the Lisa Pro printer uses a 808nm diode laser. To get a reflectance below 30% higher shear mixing (tip speed >5m/s) is needed.

**Table 3. Polypropylene powders preparation**

| Sample no. | Powder | Amount of CB (wt.%) | Type of CB | Mixer type | Mixing duration and setting | Tip speed (m/s) | Reflect @ 800 nm (%) |
|---|---|---|---|---|---|---|---|
| 16 | Addigy P6002 (PP) | 0 | | | | | 97 |
| 17 | Addigy P6002 (PP) | 0.25 | TPK 1227R | Klarstein | 3 min @ 4 | 3.5 | 69 |
| 18 | Addigy P6002 (PP) | 0.25 | TPK 1227R | Klarstein | 3 min @ 8 | 16 | 29 |
| 19 | Addigy P6002 (PP) | 0.25 | TPK 1227R | Klarstein | 3 min @ 12 | 31 | 23 |

### Example 5.

The powders from examples 2-4 were used to print tensile bars (type 1BA according to ISO 527) on a Lisa Pro (Sinterit, PL) SLS printer. Powder bed temperature and laser power ratio (LP) are listed in tables 4-6. The tensile bars were used for tensile testing according ISO 527 (5 mm/min). For each powder, three tensile bars were printed, and the mechanical properties are an average over the three test bars.

**Table 4. Mechanical properties of printed PHBV parts**

| Sample no. | Bed temperature (°C) | Laser power ratio (LP) | Tensile mod (MPa) | Max stress (MPa) | Elongation-at-break (%) |
|---|---|---|---|---|---|
| 1 | | | no fusion | | |
| 2 | | | very brittle | | |
| 3 | 165 | 1.4 | 2133 | 18.0 | 37 |
| 3b | 165 | 1.4 | 2208 | 22.0 | 5.3 |
| 4 | 163 | 1.5 | 2520 | 23.4 | 5.5 |
| 5 | 163 | 0.8 | 2736 | 24.1 | 6.3 |
| 6 | 163 | 1.5 | 2380 | 228 | 5.1 |
| 7 | 163 | 1.5 | 2255 | 226 | 4.6 |
| 8 | 163 | 1.5 | 2400 | 22.4 | 3.8 |
| Ref¹⁾ | injection molding | | 1600-2100 | 39 | 3.8 |

| | | | | | |
|---|---|---|---|---|---|
| 1) Data from the supplier brochure of Enmat Y 1000P | | | | | |

**Table 5. Mechanical properties of printed PHBH parts**

| Sample no. | Bed temperature (°C) | Laser power ratio (LP) | Tensile mod (MPa) | Max stress (MPa) | Elongation-at-break (%) |
|---|---|---|---|---|---|
| 9 | | | no fusion | | |
| 10 | 135 | 1.0 | 38 | 10 | 2.0 |
| 11 | 135 | 1.0 | 684 | 120 | 5.9 |
| 12 | 135 | 1.4 | 968 | 18.6 | 7.5 |
| 13 | 135 | 1.0 | 870 | 18.6 | 7.9 |
| 14 | 128 | 1.4 | 1114 | 20 | 166 |
| 15 | 135 | 1.0 | 1000 | 19.1 | 17.0 |
| Ref¹⁾ | Injection molding | | 1600 | 44 | 4 |

| | | | | | |
|---|---|---|---|---|---|
| 1) Data from the supplier brochure of PHBH X331N | | | | | |

**Table 6. Mechanical properties of printed Polypropylene parts**

| Sample no. | Bed temperature (°C) | Laser power ratio (LP) | Tensile mod (MPa) | Max stress (MPa) | Elongation-at-break(%) |
|---|---|---|---|---|---|
| 16 | | | no fusion | | |
| 17 | 130 | 1.3 | 423 | 7.6 | 4.7 |
| 18 | 130 | 1.3 | 792 | 162 | 15.2 |
| 19 | 130 | 1.3 | 813 | 162 | 143 |
| Ref | Injection molding | | 784 | 38 | 514 |

From these results, it can be seen that powders that have been mixed with a pigment using high shear have improved mechanical properties. In some cases, the mechanical properties are even better than injection molded parts.

### Methods.

D10, D50, and D90 particle size values were measured in accordance with ISO 13320-1 as mentioned elsewhere herein. The Particle Size Distributions (PSD) of powders from which such values were derived were measured using Laser Diffraction on a SYMPATEC HELOS system (model HELOS/H3982) with a RODOS dry dispersion unit, R5 4.5 - 875µm. D50 represents the statistical volume median of the particle size, whereas D10/D90 represent the 10th and 90th percentile of such values, respectively. Values are reported in microns, unless otherwise noted.

For measuring the Vis-NIR reflectance, powder samples were measured in duplo in a cuvette using a Perkin Elmer lambda 1050 spectrophotometer equipped with a 150 mm integrating sphere. Used settings:
Range: 300 - 2500 nm
Step: 5 nm
Slit (VIS): 5 nm
Gain (NIR): 14
Integration time (VIS): 0.4 s
Integration time (NIR): 0.32 s
Background: calibrated Spectralon
Cuvette: 2 cm, optical glass

Unless otherwise specified, the term wt.% means the amount by mass of a particular constituent relative to the entire composition into which it is incorporated.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventor for carrying out the invention. Variations of those preferred embodiments may become apparent to those of ordinary skill in the art upon reading the foregoing description. The inventor expects skilled artisans to employ such variations as appropriate, and the inventor intends for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

While the invention has been described with respect to specific examples including presently preferred modes of carrying out the invention, those skilled in the art will appreciate that there are numerous variations and permutations of the above described systems and techniques that fall within the spirit and scope of the invention as set forth in the appended claims.

## Claims

1. Method for manufacturing a powder composition having a D50 particle size value of 20-150 microns suitable for powder bed fusion additive manufacturing processes, comprising the steps of:
(a) providing a particulate starting material comprising a semicrystalline polymer;
(b) optionally, compacting the starting material with a compacting pressure of >5 kN/cm², thereby obtaining a compacted material;
(c) optionally, reducing the size of the particulate starting material or the compacted material;
(d) dry blending the starting material, the compacted material, or the size-reduced material with a pigment using high shear mixing;
(e) optionally, size fractionating the starting material, the compacted material, the size-reduced material and/or the dry blended material.

2. Method according to claim 1, wherein the semicrystalline polymer is selected from the group consisting of polyesters, polyolefins, polyamides, and combinations thereof.

3. Method according to claim 1 or 2, wherein the semicrystalline polymer is a homopolymer or copolymer of 3-hydroxy butyric acid, and wherein preferably a test article obtained by powder bed fusion of the resulting powder composition has an elongation-at-break of more than 4 %, measured according to ISO 527.

4. Method according to claim 3, wherein the semicrystalline polymer is a copolymer of 3-hydroxy butyric acid and a comonomer selected from 3-hydroxy hexanoic acid and 3-hydroxy valeric acid.

5. Method according to claim 1 or 2, wherein the semicrystalline polymer is polybutylene terephthalate or a copolymer thereof.

6. Method according to any one of claims 1-5, wherein the amount of the semicrystalline polymer relative to the total weight of the resulting powder composition is 80-99.9 %.

7. Method according to any one of claims 1-6, wherein the amount of pigment relative to the total weight of the resulting powder composition is 2.0 % or less, preferably 1.0 % or less.

8. Method according to any one of claims 1-7, wherein the pigment has a reflectivity at 800 nm of 20 % or less, and is preferably selected from the group consisting of carbon black, carbon black, ultramarine blue, iron oxides, organic pigments, and combinations thereof.

9. Method according to any one of claims 1-8, further comprising the step of heating the starting material, the compacted material, and/or the size reduced material to a temperature sufficient to prevent sticking of the starting material or compacted material, thereby obtaining an annealed material.

10. Powder composition having a D50 particle size value of 20-150 microns, preferably obtainable by a method according to any one of claims 1-8, suitable for additive manufacturing powder bed fusion processes, comprising a semicrystalline polymer and a pigment, wherein the powder composition has a reflectance at 800 nm of 50 % or less, preferably 25 % or less.

11. Powder composition according to claim 10, wherein the semicrystalline polymer is a homopolymer or copolymer of 3-hydroxy butyric acid, and wherein preferably a test article obtained by powder bed fusion of the powder composition has an elongation-at-break of more than 4 %, measured according to ISO 527.

12. Powder composition according to claim 10, wherein the semicrystalline polymer is polybutylene terephthalate.

13. Additive manufacturing method for producing a three-dimensional article, comprising the step of subjecting a powder composition according to any one of claims 10-12 to powder bed fusion.

14. Article comprising a semicrystalline polymer, obtainable by a method according to claim 13.

15. Article according to claim 14, wherein the semicrystalline polymer is a homopolymer or copolymer of 3-hydroxy butyric acid, wherein the article has an elongation-at-break of more than 4 %, measured according to ISO 527.
